# EUROPÄISCHE PATENTSCHRIFT

(11) **EP 2 777 931 B1**
(45) Veröffentlichungstag und Bekanntmachung des Hinweises auf die Patenterteilung: **22.02.2017**
(21) Anmeldenummer: 13158518.4
(22) Anmeldetag: 11.03.2013
(51) Int. Cl.: B32B 21/04, B32B 3/18

(54) **TRÄGERPLATTE**
SUPPORT PLATE
PLAQUE DE SUPPORT

(43) Veröffentlichungstag der Anmeldung: 17.09.2014
(73) Patentinhaber: Schollmayer Holz GmbH, 65462 Ginsheim-Gustavsburg (DE)
(72) Erfinder: Schollmayer, Franz, 65462 Ginsheim-Gustavsburg (DE)
(74) Vertreter: Quermann, Helmut

(56) Entgegenhaltungen:
- DE-U1-202012 104 607

## Beschreibung

Die Erfindung betrifft eine Trägerplatte zum Aufnehmen einer Last auf einer Seite der Trägerplatte, wobei die Trägerplatte eine Bohle mit beitendigen Lageranschlüssen für die Bohle ist, zur Verwendung der Trägerplatte bei einem Gerüst.

Trägerplatten finden beispielsweise Verwendung als Gerüstbohlen. Diese sind in aller Regel im Bereich ihrer abgewandten Enden mit Lageranschlüssen zum Einhängen der Gerüstbohle in vertikalen Abschnitten von Gerüsten, insbesondere Stahlgerüsten versehen. Diese Gerüstbohlen sind begehbar, sodass über das Gewicht der auf der Gerüstbohle stehenden Person bzw. stehenden Personen eine Last in die Trägerplatte eingeleitet wird. Eine Last wird auch dann eingeleitet, wenn beim Arbeiten auf dem Gerüst erforderliche Gegenstände auf der Gerüstbohle abgestellt werden.

Derartige als Gerüstbohlen Verwendung findende Trägerplatten werden vorrangig aus Holz hergestellt. Nachteilig ist hierbei, dass das Holz unter der Witterung leidet und insbesondere Beton/Mörtel, der auf die Trägerplatte gelangt, das Holz angreift. Nach kurzer Einsatzzeit sehen die Trägerplatten stark beansprucht aus. Ein weiterer Nachteil von Trägerplatten aus Holz besteht darin, dass diese nicht im Freien gelagert werden können, da Feuchtigkeit in die Trägerplatten einzieht und an dem Holz, bei entsprechend langer Lagerdauer, Schimmel und Fäulnis einsetzt, wodurch die Trägerplatten ihre statische Festigkeit verlieren und nicht mehr eingesetzt werden dürfen.

Aus der DE 296 06 452 U1 ist eine Trägerplatte zur Aufnahme einer Last bekannt, wobei diese Trägerplatte eine Gerüstbohle ist. Die Trägerplatte besteht aus einer Vielzahl von Einzelschichten aus Holz, sogenanntem Schichtholz. Die Einzelschichten des Schichtholzes sind jeweils über Klebeschichten dauerhaft miteinander verbunden. Hierbei findet als Klebeschicht ein thermoplastischer Klebstoff, beispielsweise ein Phenolharz Verwendung. Mit diesem Phenolharz werden die Einzelschichten unter relativ hohem Druck fest miteinander verbunden. Eine solche Trägerplatte weist zwar eine bessere Tragfähigkeit und Steifigkeit auf als die eingangs beschriebene Trägerplatte, die aus Vollholz besteht, ist aber wesentlich aufwendiger und kostenintensiver herzustellen. Abgesehen davon, weist diese Trägerplatte unter dem Aspekt der Bewitterungsproblematik und des Angriffs des Holzes durch Beton/Mörtel dieselben Nachteile auf wie die eingangs beschriebene Trägerplatte.

Trägerplatten finden ferner als Beton-Schalungsplatten Verwendung. Beim Einfüllen von Beton wird über den Beton eine Last in die Trägerplatte eingeleitet. In diesem Zusammenhang ist es aus der Praxis bekannt, bei der Herstellung von derartigen Beton-Schalungsplatten Phenolfilme auf fertig formatierte Sperrholz-Trägerplatten aufzubringen. Diese feuchtebeständige Beschichtung erlaubt eine deutlich längere Verwendung als die bei unbeschichteten Trägerplatten.

Aus der DE 20 2012 104 607 U1 ist eine Möbel- oder Innenausbau-Leichtbauplatte mit einem Kern aus Paulownia-Massivholz bekannt. Diese Leichtbauplatte weist eine erste Kernbeschichtungslage auf einer ersten Oberfläche des Kerns sowie eine zweite Kernbeschichtungslage auf der gegenüberliegenden, zweiten Oberfläche des Kerns auf. Der Kern besteht aus mehreren parallel zueinander verlaufenden, sogenannten Massivholz-Lamellen. Eine Kernbeschichtungslage ist als ein Harz und Dekorpapier aufweisendes Laminat ausgestaltet.

Aufgabe der vorliegenden Erfindung ist es, eine Trägerplatte der eingangs genannten Art so weiter zu bilden, das diese kostengünstig herstellbar ist, eine große Steifigkeit aufweist und deren lasttragende Oberfläche sowie deren hierzu abgewandte Oberfläche einen dauerhaften Oberflächenschutz aufweist.

Gelöst wird die Aufgabe durch eine Trägerplatte, die gemäß den Merkmalen des Patentanspruchs 1 ausgebildet ist.

Die erfindungsgemäße Trägerplatte zum Aufnehmen einer Last auf einer Seite der Trägerplatte weist somit auf dieser Seite und auf der dieser Seite abgewandten Seite eine Oberflächenschicht auf. Diese Oberflächenschicht deckt somit die Trägerplatte im Bereich deren beiden Hauptflächen ab. Dies sind diejenigen Flächen der Trägerplatte, die begangen werden bzw. auf denen eine Last abgestellt wird. So kann die Trägerplatte mit deren einen Oberflächenschicht in einem Fall nach oben gerichtet positioniert werden, im anderen Fall diese Oberflächenschicht nach unten positioniert werden.

Die Ausbildung der Trägerplatte mit den Oberflächenschichten auf den einander abgewandten Seiten der Trägerplatte ist auch unter Stabilitätsaspekten von Vorteil. Durch diese symmetrische Anordnung der Trägerplatte werden Biegekräfte, die über die Last in die Trägerplatte eingeleitet werden, von der Trägerplatte im Bereich beider Oberflächenschichten aufgenommen.

Bei der erfindungsgemäßen Trägerplatte ist ferner vorgesehen, dass die jeweilige Oberflächenschicht unter Verwendung von Phenol oder Melamin erzeugt ist. Die Verwendung dieser Komponenten dient dem Zweck, die Oberfläche der Trägerplatte zu schützen, wobei diese Oberfläche recht hart ist und sich deshalb leicht mechanisch von Beton-/Mörtelanhaftungen reinigen lässt. Außerdem stellt diese Oberflächenschicht sicher, dass durch diese keine Feuchtigkeit in die Trägerplatte eindringen kann.

Bei der Oberflächenschicht handelt es sich insbesondere um einen Phenolfilm, der aufgepresst ist und grundsätzlich aus der Veredelung von Sperrholzplatten bekannt ist, oder um einen Melaminfilm.

Bei der erfindungsgemäßen Trägerplatte ist ferner vorgesehen, dass zwischen den beiden Oberflächenschichten mindestens ein plattenförmiges Trägerteil aus verklebtem, insbesondere verleimten Vollholz angeordnet ist. Die Verwendung von verklebtem Vollholz zur Bildung des mindestens einen plattenförmigen Trägerteils trägt wesentlich zur kostengünstigen Herstellung der Trägerplatte bei. So kann das plattenförmige Trägerteil sehr einfach aus verklebtem bzw. verleimtem Vollholz herstellt werden. Die aufwendige Herstellung einer Sperrholzplatte oder dergleichen ist zur Herstellung der Trägerplatte nicht erforderlich.

Gemäß einer bevorzugten Weiterbildung der erfindungsgemäßen Trägerplatte ist vorgesehen, dass das plattenförmige Trägerteil auf dessen der Oberflächenschicht zugewandten Fläche mit einem Deckelement verklebt ist. Diese Ausgestaltung der Trägerplätte berücksichtigt, dass in aller Regel ein direktes Aufbringen der Oberflächenschicht, insbesondere ein direktes Aufbringen, insbesondere Aufpressen eines Phenolfilms oder eines Melaminfilms auf das plattenförmige Trägerteil nicht möglich ist, da das Quell- und Schwindverhalten des Vollholzes höher ist als die Elastizität der Oberflächenschicht und diese demzufolge reißt. Deshalb wird es als besonders vorteilhaft angesehen, das plattenförmige Trägerteil auf dessen der Oberflächenschicht zugewandten Fläche mit dem Deckelement zu verkleben bzw. das Deckelement auf das plattenförmige Trägerteil aufzukleben. Durch dieses Verkleben bzw.Verleimen wird die Trägerplatte stabilisiert und das Quell- und Schwindverhalten des Vollholzes stark eingeschränkt.

Das Verkleben von Trägerteil, Deckelement und Oberflächenschicht erfolgt vorzugsweise vollflächig.

Die Trägerplatte kann so ausgebildet sein, dass sie ein einziges Trägerteil aufweist, das auf den Seiten, denen die Oberflächenschichten zugeordnet sind, mit den Deckelementen verklebt ist. Diese Gestaltung ist baulich besonders einfach und statisch besonders vorteilhaft.

Gemäß einer modifizierten Ausführungsform ist vorgesehen, dass die Trägerplatte zwei Trägerteile aufweist und zwischen diesen ein Deckelement angeordnet ist, das mit den Trägerteilen flächig verklebt ist. Bei dieser Variante ist das Deckelement näher zur neutralen Zone der Trägerplatte positioniert und trägt dort zur Stabilisierung der beiden Trägerteile bei. Bei der anderen Ausführungsform, bei der die Deckelemente auf den Seiten der Trägerplatte angeordnet sind, denen die Oberflächenschichten zugeordnet sind, sind die Deckelemente in größerem Abstand zum zentralen Bereich der Trägerplatte angeordnet.

Grundsätzlich ist es auch möglich, dass die Trägerplatte, die zwei Trägerteile aufweist, sowohl zwischen diesen Trägerteilen ein Deckelement aufweist als auch im Bereich der Oberflächenschichten Deckelemente, aufweist.

Bei dem jeweiligen Deckelement handelt es sich insbesondere um ein Furnier, eine Matte oder ein verstärktes Papier. Derartige Deckelemente sind bestens geeignet, zur Erhöhung der Stabilität der Trägerplatte beizutragen. Dies ist insbesondere dann der Fall, wenn das jeweilige Deckelement mit der Oberflächenschicht versehen wird, beispielsweise die Oberflächenschicht, die unter Verwendung von Phenol oder Melamin erzeugt wird, auf das Deckelement aufgepresst wird oder das Deckelement mit dem die Oberflächenschicht bildenden Material getränkt wird.

Die Oberflächenschicht wird somit bevorzugt auf das Deckelement aufgebracht. Grundsätzlich ist es auch möglich, die Oberflächenschicht direkt auf das plattenförmige Trägerteil aufzubringen.

Bei der Oberflächenschicht handelt es sich insbesondere um eine Filmschicht.

Das plattenförmige Trägerteil ist vorzugsweise durch mehrere, nebeneinander angeordnete und miteinander verklebte, insbesondere verleimte Vollholzteile gebildet. Hierdurch lässt sich ein plattenförmiges Trägerteil mit einer recht hohen Eigenstabilität erzeugen. Von Vorteil ist es, wenn die Vollholzteile in Längsrichtung der Trägerplatte angeordnet sind.

Die Deckelemente sind insbesondere durch einzelne nebeneinander angeordnete Teilelemente gebildet, die, betreffend die Orientierung der Trägerplatte quer und/oder längs verlaufend angeordnet sind.

Bei dem Vollholz handelt es sich insbesondere um Fichtenholz. Findet ein Furnier Verwendung, ist dieses insbesondere ein Buchenfurnier. So hat Fichte einen Elastizitätsmodul von ca. 10.000 N/mm² und ist hierbei relativ leicht. Buche besitzt einen Elastizitätsmodul von 18.000 N/mm². Ist insbesondere das Buchenfurnier im Bereich der Oberflächenschichten angeordnet, wirkt sich die Biegefestigkeit in der Zug- und Druckzone statisch besondere vorteilhaft aus und es hat die gesamte Trägerplatte eine wesentlich bessere Biegesteifigkeit als bei reiner Fichteverleimung.

Insbesondere ist die Trägerplatte eine Bohle mit beidseitigen Lageranschlüssen für die Bohle an vertikalen Gerüststützen.

Weitere Merkmale der Erfindung sind in den Unteransprüchen, der Beschreibung der Figuren sowie den Figuren selbst darstellt, wobei bemerkt wird, dass alle Einzelmerkmale und alle Kombinationen von Einzelmerkmalen erfindungswesentlich sind.

In den Figuren ist die Erfindung anhand zweier Ausführungsbeispiele dargestellt, ohne hierauf beschränkt zu sein. Es zeigt:
- Fig. 1: eine Draufsicht einer erfindungsgemäßen Trägerplatte, die als Gerüstbohle ausgebildet ist,
- Fig. 2: eine Seitenansicht A der in Fig. 1 dargestellten Trägerplatte,
- Fig. 3: einen Schnitt durch die Trägerplatte gemäß der Linie B-B in Fig. 2, wobei in dieser Figur ein erster Aufbau dieser Trägerplatte veranschaulicht ist,
- Fig. 4: ein Schnitt gemäß Fig. 3, wobei für dieses Ausführungsbeispiel ein gegenüber dem Ausführungsbeispiel nach Fig. 3 modifizierter Aufbau der Trägerplatte veranschaulicht ist.

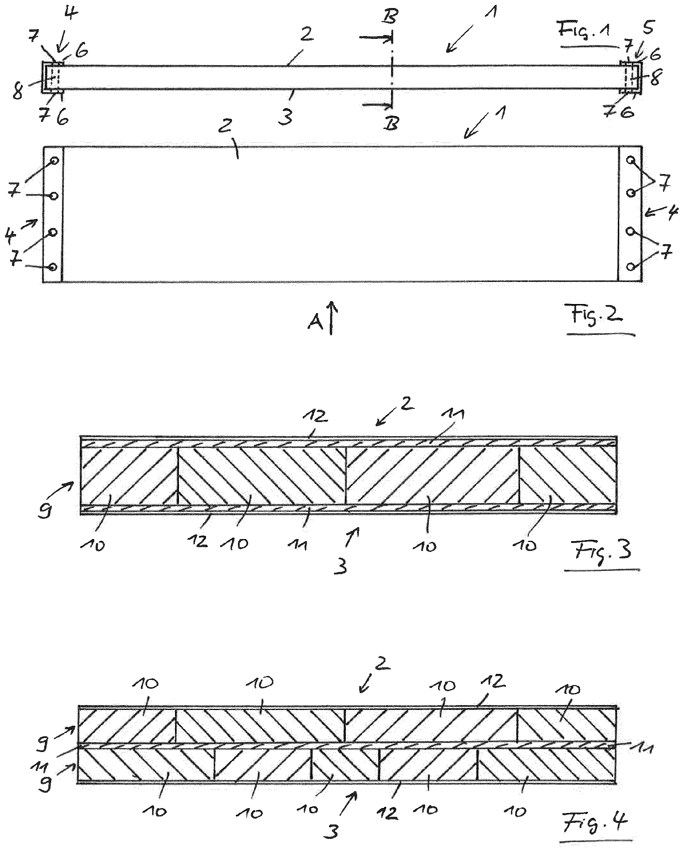

Die Fig. 1 und 2 zeigen eine Trägerplatte 1, die als Gerüstbohle ausgebildet ist. Je nach Einbau der Gerüstbohle in Stützen eines Gerüst, dient die Trägerplatte 1 der Aufnahme einer Last auf deren Seite 2 oder 3. Bei der gezeigten Anordnung der Trägerplatte 1 gemäß Fig. 2 stellt die Seite 2 die Oberseite und die Seite 3 die Unterseite der Trägerplatte 1 dar. Ist die Trägerplatte um 180° um deren Längsachse gedreht angeordnet, ist die Seite 2 die Unterseite und die Seite 3 die Oberseite der Trägerplatte 1.

Die Trägerplatte 1 ist im Bereich deren abgewandten Stirnseite mit Metallbeschlägen 4 und 5 versehen, wobei der jeweilige Metallbeschlag 4 bzw. 5 das stirnseitige Ende der Trägerplatte 1 U-förmig umgreift. Im Bereich dieses Endes ist der Metallbeschlag 4 bzw. 5 fest mit der Trägerplatte 1 verbunden. Der jeweilige Metallbeschlag 4 bzw. 5 weist im Bereich seines jeweiligen Schenkels 6 vier Löcher 7 auf, die mit Löchern 8 in der Trägerplatte 1 fluchten, sodass die Trägerplatte 1 im Bereich dieser Löcher 7, 8 in Stiftaufnahmen zweier Stützen des Gerüsts eingesteckt werden kann.

Erfindungswesentlich ist bei der Trägerplatte 1 deren Aufbau, der für das erste Ausführungsbeispiel in Fig. 3 veranschaulicht ist:
So weist die Trägerplatte 1 ein Trägerteil 9 auf. Dieses ist als Platte mit einer Länge und Breite entsprechend der Trägerplatte 1 ausgebildet. Dieses Trägerteil 9 besteht aus verleimten Vollholz, insbesondere aus Fichtenholz. Das Trägerteil 9 ist durch mehrere nebeneinander angeordnete, in Längsrichtung der Trägerplatte 1 verlaufende Vollholzteile 1 gebildet, die miteinander verleimt sind. Konkret weist das Trägerteil 9 gemäß dem Ausführungsbeispiel vier nebeneinander angeordnete Vollholzteile 10 auf, wobei, bei derselben Länge und Höhe der Vollholzteile 10, deren Breite unterschiedlich sein kann. So weisen die beiden äußeren Vollholzteile 10 dieselbe Breite auf, wobei die Breite dieses äußeren Vollholzteils 10 deutlich geringer ist als die Breite des jeweiligen weiter innen angeordneten Vollholzteils 10.

Das Trägerteil 1 ist sowohl auf der Seite 2 als auch auf der Seite 3 mit einem Deckelement 11 verklebt, bei dem es sich um ein Buchenfurnier handelt. Dieses Deckelement 11 deckt das Vollholzteil 10 auf der Seite 2 bzw. Seite 3 vollflächig ab. Dadurch, dass das Deckelement 11 benachbart der jeweiligen Seite 2 bzw. 3 angeordnet ist, somit in großem Abstand zur neutralen Zone des Trägerteils 9 angeordnet ist, wirkt sich die hohe Biegefestigkeit des Furniers in der Zug- und Druckzone statisch besonders vorteilhaft aus und es hat somit die gesamte Trägerplatte 1 eine hohe Biegesteifigkeit. Pro Seite 2 bzw. 3 ist die Lage Buchenfurnier quer und längs verlaufend auf das Trägerteil 9 aufgeleimt. Hierdurch wird das aus Vollholz bestehende Trägerteil 9 stabilisiert und das Quell- und Schwindverhalten des Vollholzes stark eingeschränkt. Ferner trägt das längs verlaufende Buchenfurnier in der obersten Lage zur statischen Verbesserung bei. Auf das jeweilige Deckelement 11, wobei die Deckelemente 11 jeweils dieselbe Stärke aufweisen, ist eine Oberflächenschicht 12 unter Verwendung von Phenol oder Melamin vollflächig aufgebracht. Insbesondere ist ein Phenolfilm oder Melaminfilm auf das jeweilige Deckelement 11 aufgepresst. Der Film schützt die Oberfläche des Deckelements 11, ist sehr hart und lässt sich leicht mechanisch von Betonanhaftungen reinigen. Es kann keine Feuchtigkeit durch den Film, somit durch die Oberflächenschicht 12 in das Deckelement 11 und damit das aus Vollholz bestehende Trägerteil 9 eindringen, da die Oberflächenschicht 12 das Deckelement vollständig abdeckt.

Die freien und damit ungeschützten Stirnseiten und schmalen Längsseiten der Trägerplatte 1 können zusätzlich mit einer wasserabstoßenden Beschichtung versehen werden.

Das Ausführungsbeispiel gemäß der Fig. 4 unterscheidet sich von demjenigen nach der Fig. 3 grundsätzlich dadurch, dass statt einem Trägerteil 9 zwei Trägerteile 9 vorgesehen sind, zwischen denen ein Deckelement 11 angeordnet ist, sodass die den Seiten 2 und 3 zugeordneten Oberflächenschichten 12 unmittelbar vollflächig auf die Trägerteile 9 aufgebracht werden. Zur Vermeidung von Wiederholungen wird auf die Beschreibung zur Fig. 3 verwiesen und es sind zur Erläuterung des Ausführungsbeispiels nach Fig. 4 auch die zur Fig. 3 verwendeten Bezugsziffern genannt.

Im Detail ist bei dem Ausführungsbeispiel nach Fig. 4 die Stärke des Trägerteils 9 ungefähr halb so stark wie die Stärke des Trägerteils 9 gemäß dem Ausführungsbeispiel nach Fig. 3 und es ist die Stärke des einen Deckelements 11 bei dem Ausführungsbeispiel nach Fig. 4 entsprechend der Stärke des jeweiligen Deckelements 11 bei Ausführungsbeispiel nach Fig. 3. Die Ausbildung und Anordnung der jeweiligen Oberflächenschicht 12 gemäß Ausführungsbeispiel nach Fig. 4 entspricht derjenigen gemäß Ausführungsbeispiel nach Fig. 3.

Auch beim Ausführungsbeispiel nach Fig. 4 besteht das jeweilige Trägerteil 9 aus Fichtenholz und es ist das Deckelement 11 ein Buchenfurnier. Die jeweilige Oberflächenschicht 12 ist insbesondere ein Phenol- oder Melaminfilm, der unmittelbar vollflächig auf das jeweilige Trägerteil 9 aufgepresst ist.

Beim Ausführungsbeispiel nach Fig. 4 ist die Gefahr des Reißens des aus Vollholz gebildeten jeweiligen Trägerteils 9 reduziert, weil die Stärke des jeweiligen Trägerteils 9 deutlich gegenüber der Stärke des Trägerteils 9 gemäß Ausführungsbeispiel nach Fig. 3 reduziert ist. Das im neutralen Bereich der Trägerplatte 1 angeordnete Deckelement 11 gemäß Ausführungsbeispiel nach Fig. 4 verbindet die beiden Trägerteile 9 und reduziert das Quell- und Schwindverhalten des Fichtenholzes, sodass die Gefahr eines Risses des Phenol- bzw. Melaminfilms reduziert ist. Deshalb kann bei dem Ausführungsbeispiel nach Fig. 4 die jeweilige Oberflächenschicht 12 unmittelbar vollflächig auf das Trägerteil 9 aufgebracht werden.

### Bezugszeichenliste

- 1: Trägerplatte
- 2: Seite
- 3: Seite
- 4: Metallbeschlag
- 5: Metallbeschlag
- 6: Schenkel
- 7: Loch
- 8: Loch
- 9: Trägerteil
- 10: Vollholzteil
- 11: Deckelement
- 12: Oberflächenschicht

## Patentansprüche

1. Trägerplatte (1) zum Aufnehmen einer Last auf einer Seite (2 bzw. 3) der Trägerplatte (1), wobei die Trägerplatte (1) eine Bohle mit beidendigen Lageranschlüssen (4, 5) für die Bohle ist, zur Verwendung der Trägerplatte (1) bei einem Gerüst, **dadurch gekennzeichnet, dass** die Trägerplatte (1) auf dieser Seite (2 bzw. 3) und auf der dieser Seite (2 bzw. 3) abgewandten Seite (3 bzw. 2) eine Oberflächenschicht (12), die unter Verwendung von Phenol oder Melamin erzeugt ist, aufweist, sowie zwischen diesen beiden Oberflächenschichten (12) mindestens ein plattenförmiges Trägerteil (9) aus verklebten Vollholz angeordnet ist.

2. Trägerplatte nach Anspruch 1, wobei das plattenförmige Trägerteil (9) auf dessen der Oberflächenschicht (12) zugewandten Fläche mit einem Deckelement (11) verklebt ist.

3. Trägerplatte nach Anspruch 2, wobei die Trägerplatte (1) ein einziges Trägerteil (9) aufweist, das auf den Seiten (2, 3), denen die Oberflächenschichten (12, 12) zugewandt sind, mit den Deckelementen (11, 11) verklebt ist.

4. Trägerplatte nach einem der Ansprüche 1 bis 3, wobei die Trägerplatte (1) zwei Trägerteile (9, 9) aufweist und zwischen diesen ein Deckelement (11) angeordnet ist, das mit den Trägerteilen (9, 9) verklebt ist.

5. Trägerplatte nach einem der Ansprüche 2 bis 4, wobei das Deckelement (11) ein Furnier, eine Matte oder ein verstärktes Papier ist.

6. Trägerplatte nach einem der Ansprüche 1 bis 5, wobei die Oberflächenschicht (12) auf das Deckelement (11) aufgebracht ist

7. Trägerplatte nach einem der Ansprüche 1 bis 4, wobei die Oberflächenschicht (12) auf das plattenförmige Trägerteil (9) aufgebracht ist.

8. Trägerplatte nach einem der Ansprüche 1 bis 7, wobei die Oberflächenschicht (12) eine Filmschicht ist.

9. Trägerplatte nach einem der Ansprüche 1 bis 8, wobei das plattenförmige Trägerteil (9) durch mehrere, nebeneinander angeordnete und miteinander verklebte Vollholzteile (10) gebildet ist.

10. Trägerplatte nach Anspruch 9, wobei die Vollholzteile (10) in Längsrichtung der Trägerplatte (1) angeordnet sind.

11. Trägerplatte nach Anspruch 10, wobei das jeweilige Deckelement (11) durch einzelne, nebeneinander angeordnete Teilelemente gebildet ist, die, betreffend die Orientierung der Trägerplatte (1), quer- und/oder längsverlaufend angeordnet sind.

12. Trägerplatte nach einem der Ansprüche 1 bis 11, wobei das Vollholz Fichtenholz ist.

13. Trägerplatte nach einem der Ansprüche 1 bis 12, wobei das Furnier ein Buchenfurnier ist.

## Claims

1. Support plate (1) for receiving a load on one side (2 or 3) of the support plate (1), wherein the support plate (1) is a plank with bearing connections (4, 5) at both ends for the plank, for use of the support plate (1) in scaffolding, **characterized in that**, on said side (2 or 3) and on the side (3 or 2) remote from said side (2 or 3), the support plate (1) has a surface layer (12), which is produced using phenol or melamine, and also at least one plate-shaped support part (9) made of adhesively bonded solid wood is arranged between said two surface layers (12).

2. Support plate according to Claim 1, wherein that face of the plate-shaped support part (9) which faces toward the surface layer (12) is adhesively bonded to a cover element (11).

3. Support plate according to Claim 2, wherein the support plate (1) has a single support part (9), which is adhesively bonded to the cover elements (11, 11) on those sides (2, 3) toward which the surface layers (12, 12) face.

4. Support plate according to one of Claims 1 to 3, wherein the support plate (1) has two support parts (9, 9), and a cover element (11) is arranged between said support parts and is adhesively bonded to the support parts (9, 9).

5. Support plate according to one of Claims 2 to 4, wherein the cover element (11) is a veneer, a mat or a strengthened paper.

6. Support plate according to one of Claims 1 to 5, wherein the surface layer (12) is applied to the cover element (11).

7. Support plate according to one of Claims 1 to 4, wherein the surface layer (12) is applied to the plate-shaped support part (9).

8. Support plate according to one of Claims 1 to 7, wherein the surface layer (12) is a film layer.

9. Support plate according to one of Claims 1 to 8, wherein the plate-shaped support part (9) is formed by a plurality of solid wood parts (10) arranged alongside one another and adhesively bonded to one another.

10. Support plate according to Claim 9, wherein the solid wood parts (10) are arranged in the longitudinal direction of the support plate (1).

11. Support plate according to Claim 10, wherein the respective cover element (11) is formed by individual partial elements which are arranged alongside one another and which, in relation to the orientation of the support plate (1), are arranged running transversely and/or longitudinally.

12. Support plate according to one of Claims 1 to 11, wherein the solid wood is spruce wood.

13. Support plate according to one of Claims 1 to 12, wherein the veneer is a beech veneer.

## Revendications

1. Plaque de support (1) destinée à recevoir une charge sur un côté (2 ou 3) de la plaque de support (1), dans laquelle la plaque de support (1) est une planche épaisse avec des raccords de support (4, 5) aux deux extrémités pour la planche épaisse, destinée à une utilisation de la plaque de support (1) dans une charpente, **caractérisée en ce que** la plaque de support (1) présente sur ce côté (2 ou 3) ou sur le côté (3 ou 2) opposé à ce côté (2 ou 3) une couche de surface (12), qui est produite avec utilisation de phénol ou de mélamine, et au moins une partie de support en forme de plaque (9) en bois massif collé est disposée entre ces deux couches de surface (12).

2. Plaque de support selon la revendication 1, dans laquelle la partie de support en forme de plaque (9) est collée avec un élément de couverture (11) sur sa face tournée vers la couche de surface (12).

3. Plaque de support selon la revendication 2, dans laquelle la plaque de support (1) présente une partie de support unique (9), qui est collée avec les éléments de couverture (11, 11) sur les côtés (2, 3) vers lesquels les couches de surface (12, 12) sont tournées.

4. Plaque de support selon l'une quelconque des revendications 1 à 3, dans laquelle la plaque de support (1) présente deux parties de support (9, 9) et un élément de couverture (11) est disposé entre celles-ci, qui est collé avec les parties de support (9, 9).

5. Plaque de support selon l'une quelconque des revendications 2 à 4, dans laquelle l'élément de couverture (11) est un placage, une natte ou un papier renforcé.

6. Plaque de support selon l'une quelconque des revendications 1 à 5, dans laquelle la couche de surface (12) est appliquée sur l'élément de couverture (11) .

7. Plaque de support selon l'une quelconque des revendications 1 à 4, dans laquelle la couche de surface (12) est appliquée sur la partie de support en forme de plaque (9).

8. Plaque de support selon l'une quelconque des revendications 1 à 7, dans laquelle la couche de surface (12) est une couche de film.

9. Plaque de support selon l'une quelconque des revendications 1 à 8, dans laquelle la partie de support en forme de plaque (9) est formée par plusieurs pièces en bois massif (10) juxtaposées et collées les unes aux autres.

10. Plaque de support selon la revendication 9, dans laquelle les pièces en bois massif (10) sont disposées en direction longitudinale de la plaque de support (1).

11. Plaque de support selon la revendication 10, dans laquelle l'élément de couverture respectif (11) est formé par des éléments partiels individuels juxtaposés qui, par rapport à l'orientation de la plaque de support (1), sont disposés en direction transversale et/ou longitudinale.

12. Plaque de support selon l'une quelconque des revendications 1 à 11, dans laquelle le bois massif est du bois de sapin.

13. Plaque de support selon l'une quelconque des revendications 1 à 12, dans laquelle le placage est un placage de hêtre.
